(19) Europäisches Patentamt
European Patent Office
Office européen des brevets

(11) **EP 4 446 252 A2**

(12) **EUROPEAN PATENT APPLICATION**

(43) Date of publication:
**16.10.2024 Bulletin 2024/42**

(21) Application number: **24164158.8**

(22) Date of filing: **18.03.2024**

(51) International Patent Classification (IPC):
**B65G 1/04** *(2006.01)*　　　**B66F 9/06** *(2006.01)*
**B66F 9/075** *(2006.01)*　　　**B66F 9/12** *(2006.01)*

(52) Cooperative Patent Classification (CPC):
**B66F 9/122; B65G 1/0421; B66F 9/063;
B66F 9/0755**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 US 202363452631 P**

(71) Applicant: **The Raymond Corporation
Greene, NY 13778 (US)**

(72) Inventors:
• **TRACY, Erik C.
Johnson City, NY 13790 (US)**
• **WEISS, Joseph A.
Greene, NY 13778 (US)**

(74) Representative: **Zacco Sweden AB
P.O. Box 5581
Löjtnantsgatan 21
114 85 Stockholm (SE)**

(54) **LOAD HANDLING SENSORS FOR A MATERIAL HANDLING VEHICLE**

(57)　　　A material handling vehicle (60) can include a first camera (104) to determine the position of an object in a first camera field of view (116), and a second camera (108) to determine the position of an object in a second camera field of view (120). The vehicle may further include a fork position sensor (602) to determine whether one or more forks (74) of the material handling vehicle (60) are extended and/or retracted. In one example, a controller (150) can be in communication with the first sensor, the second sensor, and the fork position sensor (602), the controller (150) to autonomously control the material handling vehicle (60) to pick-up or drop-off a load (604) based on information from the first camera (104), the second camera (108), and the fork position sensor (602).

FIG. 1

**Description**

CROSS-REFERENCE TO RELATED APPLICATIONS

This application claims the benefit of U.S. Provisional Application No. 63/452,631, filed March 16, 2023, which is herein incorporated by reference in its entirety.

BACKGROUND

Material handling vehicles can be found in warehouses, factories, shipping yards, and, generally, wherever pallets, large packages, or loads of goods are transported from place to place. Material handling vehicles typically include load supporting members or forks for lifting packages or pallets. Material handling vehicles may include sensing features to allow the material handling vehicle to operate as an automatic guided vehicle (AGV). An AGV may include a control system, and can be programmed to store travel routes, and can be integrated with the drive, steering, and braking systems of the vehicle.

BRIEF SUMMARY

Embodiments of the present disclosure provide systems and methods that include one or more load handling sensors for a material handling vehicle.
In one aspect, the present disclosure describes a material handling vehicle. The material handling vehicle includes a first camera to determine the position of an object in a first camera field of view, and a second camera to determine the position of an object in a second camera field of view. The vehicle further includes a fork position sensor to determine whether one or more forks of the material handling vehicle are extended and/or retracted. In one example, a controller is in communication with the first sensor, the second sensor, and the fork position sensor, the controller to autonomously control the material handling vehicle to pick-up or drop-off a load based on information from the first camera, the second camera, and the fork position sensor.
In another aspect, the material handling vehicle include a method of dropping off a load supported by a material handling vehicle. The method includes guiding, via a controller, the material handling vehicle to a drop-off location provided by a warehouse management system to the controller, determining, via at least a second camera mounted to the material handling vehicle via a moveable camera assembly, whether the drop-off location is vacant using at least the second camera, extending a fork secured to the material handling vehicle towards the load to position the load within the drop-off location, determining, via a fork position sensor secured to the material handling vehicle, that the fork is in an extended position, sensing, via a load beam sensor secured to the material handling vehicle adjacent the fork position sensor, that a load beam of the drop-off location is within a predetermined proximity of the load, lowering the fork to place the load within the drop-off location when the fork position sensor determines that the fork is in an extended position and the load beam sensor senses the load beam is within the predetermined proximity of the load, and retracting the fork to disengage the load.
In one aspect, the material handling vehicle includes a vehicle body, a mast, and at least one fork extending from a load backrest to a tip end, the at least one fork being selectively movable relative to the vehicle body and configured to support a load. The vehicle further includes a first camera secured to the load backrest and positioned proximate a top surface of the at least one fork, the first camera to determine a position of an object in a first camera field of view, a fork position sensor secured to the mast, the fork position sensor to determine whether the forks are in an extended position or a retracted position, and a load beam sensor mounted adjacent the fork position sensor, the load beam sensor to indicate to a controller that a load handling operation of the material handling vehicle is complete.
These and still other advantages of the invention will be apparent from the detailed description and drawings. What follows is merely a description of some preferred embodiments of the present invention. To assess the full scope of the invention, the claims should be looked to as these preferred embodiments are not intended to be the only embodiments within the scope of the claims.

BRIEF DESCRIPTION OF THE DRAWINGS

The invention will be better understood and features, aspects, and advantages other than those set forth above will become apparent when consideration is given to the following detailed description thereof. Such detailed description makes reference to the following drawings.

FIG. 1 is a side view of a material handling vehicle according to aspects of the present disclosure.
FIG. 2 is a front view of the material handling vehicle of FIG. 1 according to aspects of the present disclosure.

FIG. 3 is a top plan view of the material handling vehicle of FIG. 1 according to aspects of the present disclosure.

FIG. 4 is an enlarged front view of a load handling portion of the material handling vehicle of FIG. 1 according to aspects of the present disclosure.

FIG. 5 is a diagrammatic view of a first stage of a pick or place process conducted by the material handling vehicle of FIG. 1 according to aspects of the present disclosure.

FIG. 6 is a diagrammatic view of a second stage of the pick or place process of FIG. 5 conducted by the material handling vehicle of FIG. 1 according to aspects of the present disclosure.

FIG. 7 is a diagrammatic view of a third stage of the pick or place process of FIG. 5 conducted by the material handling vehicle of FIG. 1 according to aspects of the present disclosure.

FIG. 8 is flowchart illustrating the pick or place process of FIG. 5 conducted by the material handling vehicle of FIG. 1 according to aspects of the present disclosure.

FIG. 9 is a flowchart illustrating a pick or place process conducted by the material handling vehicle of FIG. 1 according to aspects of the present disclosure.

FIG. 10 is a first portion of a flowchart illustrating a pick or place process conducted by the material handling vehicle of FIG. 1 according to aspects of the present disclosure.

FIG. 11 is an additional portion of a flowchart illustrating a pick or place process conducted by the material handling vehicle of FIG. 1 according to aspects of the present disclosure.

FIG. 12 is a continuation of the flowchart illustrating the pick or place process of FIG. 11 conducted by the material handling vehicle of FIG. 1 according to aspects of the present disclosure.

FIG. 13 is a perspective view of an example of a load for use with the material handling vehicle of FIG. 1 according to aspects of the present disclosure.

FIG. 14 is a diagrammatic view of the material handling vehicle of FIG. 1 in communication with a warehouse management system.

DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise specified or limited, directional terms are presented only with regard to the particular embodiment and perspective described. For example, reference to features or directions as "horizontal," "vertical," "front," "rear," "left," "right," and are generally made with reference to a particular figure or example and are not necessarily indicative of an absolute orientation or direction. However, relative directional terms for a particular embodiment may generally apply to alternative orientations of that embodiment. For example, "front" and "rear" directions or features (or "right" and "left" directions or features, and so on) may be generally understood to indicate relatively opposite directions or features.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH® vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

It should be noted that the various material handling vehicles (MHVs) listed above may perform a variety of load handling operations. For example, the MHVs may operate the load handling portion (e.g., forks, mast, and/or fork carriage, etc.) of the MHV to traverse (e.g., move the forks up to a full load depth), tilt, reach (e.g., move the forks up to a partial load depth), rotate, drive (e.g., move the MHV), travel (e.g., move the MHV), and/or any combination thereof to complete a load handling operation.

As should be noted, for certain types of vehicles there are training requirements imposed by various government agencies, laws, rules, and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

The invention will now be described more specifically with reference to the following embodiments. It is to be noted that the following embodiments are presented herein for purpose of illustration and description only. It is not intended to be exhaustive or to be limited to the precise form disclosed.

Disclosed herein generally is a material handling vehicle that can be configured as an autonomous and/or semi-autonomous MHV. The MHV can include at least one camera, sensor, and/or any other object detection device in order to selectively control the material handling vehicle to pick-up and/or drop-off a load in a variety of locations including, for example, a space in a rack and/or a space on the floor. Cameras can be arranged so that, while a load is carried by the MHV, a bottom portion of the load is in one camera's field of view (FOV) and a top portion of the load is in another camera's FOV. The cameras may also be positioned so that their respective FOVs extends above, below, and/or around the sides of the load. Additionally, sensors can be positioned on or near the tips of the MHV's load-carrying forks and can be used to detect the presence of an object in front of and/or between the forks. With the cameras and/or sensors, the MHV can obtain information about the position and/or orientation of the load and the space around the MHV. This information may then be used by the MHV to complete a pick-up and/or drop-off the load.

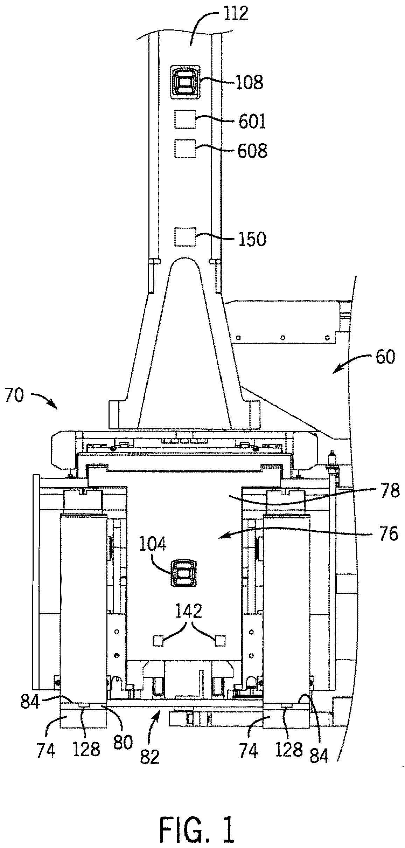

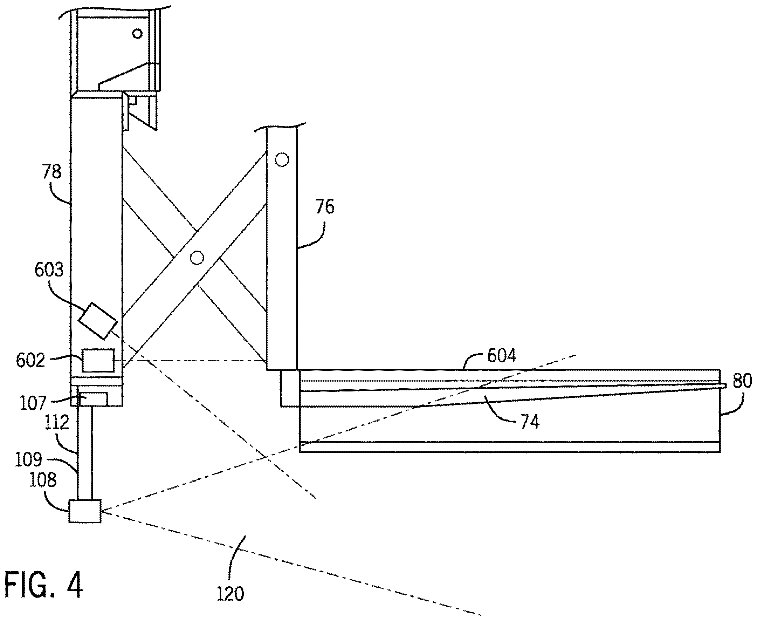

Referring now to the figures, and in particular to FIGS. 1-4, an example of a material handling vehicle (MHV) 60 that can include a fork carriage or assembly 70 is shown. The MHV 60 may include a mast 72 with the fork carriage/assembly 70 coupled to and/or a component of the mast 72. The fork assembly 70 can include two forks 74 (e.g., load supporting members) that are laterally separated from one another. Each fork 74 may extend from a front side 76 of a load backrest 78 to a respective fork tip 80, opposite the load backrest 78. The forks 74 can be positioned proximate a bottom side 82 of the fork assembly 70 such that top surfaces 84 of the forks 74 are generally horizontal and coplanar.

In one example, the fork assembly 70 may be movably coupled to the MHV 60 such that the fork assembly 70 can selectively translate, rotate, and/or a combination thereof, in at least one direction relative to the MHV 60. In the illustrated example, the fork assembly 70 may be vertically movable (e.g., in a direction perpendicular to a floor on which the MHV 60 travels) and pivotally rotatable relative to the mast 72. Additionally or alternatively, the forks 74 may selectively translate, rotate, or a combination thereof, in at least one direction relative to the fork assembly 70. In some examples, the MHV 60 may include a height sensor to measure a height of the forks 74, for example, relative to a floor on which the MHV 60 travels. In some embodiments, a MHV may include a fork assembly having more or fewer load supporting members, and at least one load supporting member may be in a different position than the forks 74 illustrated in FIGS. 1-4.

The MHV 60 can include a first camera 104 mounted to the load backrest 78, and a second camera 108 mounted on a movable assembly 112. In one example, the moveable assembly 112 extends below the forks 74 when the forks are raised and extends above the first camera 104 when the forks are lowered. The moveable assembly 112 may be powered via an actuator, such as an electric motor and/or other actuators. Alternatively or additionally, the assembly 112 may be powered by gravity, such that when the forks 74 are raised off the ground the effects of gravity move the second camera and the corresponding assembly 112 below the forks 74. As should be appreciated, actuation of the second camera 108 permits different viewing angles depending on the position of the forks 74. For example, the second camera 108 may permit a view angle beneath the load and/or forks when the forks are raised and a view angle above the load and/or forks when the forks are lowered. In other embodiments, the MHV 60 may include three (3) cameras, such as the first camera 104, the second camera 108, and a third camera 103, which may be located in a tower 106 and/or other fixed location situated above the first and second cameras 104, 108.

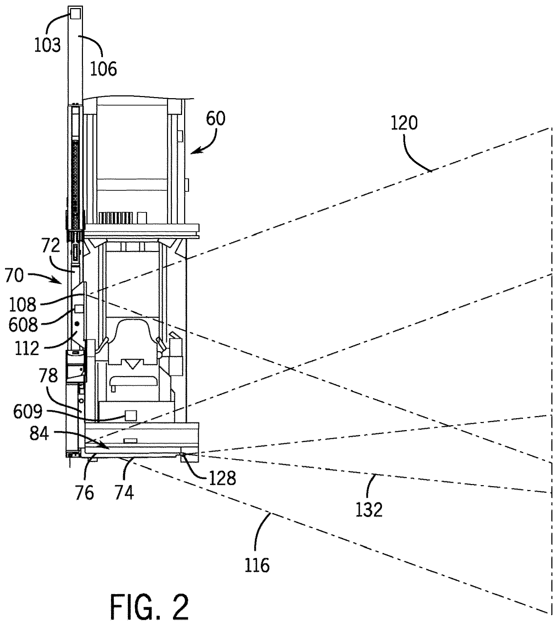

Generally, the first camera 104 may be positioned slightly above a top surface 84 of the forks 74. For example, the first camera 104 may be positioned so that a lower surface of the first camera 104 is substantially coplanar with the top surface 84 of the forks 74. In some examples, the first camera 104 may be positioned so that the lower surface of the first camera 104 is above the top surface 84 of the forks 74, such as, e.g., at least one centimeter ("cm"). In some examples, the first camera 104 may be positioned so that the lower surface of the first camera 104 is between one and eighty centimeters above the top surface 84 of the forks 74. The first camera 104 may be positioned between the forks 74 so that the forks 74 are substantially symmetrical about the first camera 104. Further, the first camera 104 may be oriented to project in a forward direction away from the load backrest 78 so that a first field of view (FOV) 116 (see, e.g., FIG. 2) of the first camera 104 extends in front of the fork assembly 70. More specifically, as shown in FIG. 2, the first FOV 116 may extend toward the fork tips 80 of the forks 74. In some examples, the first camera 104 may be positioned so that the first FOV 116 is generally angled toward, away from, or parallel to the forks 74.

As shown in FIGS. 2-4, the second camera 108 has a second camera field of view 120, which is movable based on a position of the second camera 108. For example, when the second camera 108 is positioned in a first position, above the first camera 104, the second camera field of view 120 may include an area above and in front of the forks and/or the load. In another example, when the second camera 108 is positioned in a second position, below the first camera 104, the second camera field of view 120 may include an area below and in front of the forks and/or the load. As should be appreciated, as the position of the second camera 108 is fully modular, the corresponding second camera field of view 120 is likewise fully modular. In this case, fully modular refers to the ability of the camera to be positioned above the forks and/or load, below the forks and/or load, centered with the forks and/or load, and/or in any positioned desired by an operator. Similarly, as the second camera field of view is based on camera position, the second camera field of view is likewise fully modular (e.g., able to change position based on camera position and/or any position desired by an operator). This enables the second camera 108 to gain imaging information and/or views from multiple perspectives based on a position of the forks and/or load.

In some examples, at least one of the first camera 104 and the second camera 108 may be a 3-D camera (e.g., a time-of-flight camera) that may be able to measure distances. More specifically, a 3-D camera is generally a camera that can provide an output that makes it possible to assess the position of coordinates in a three-dimensional volume of space (e.g., X, Y, and Z coordinates). The 3-D camera is preferably provided with illumination possibilities such that if the surroundings are dark the camera itself can achieve a sufficient lighting for providing a usable output. A 3-D camera generally has a FOV that can be defined by a particular range. For example, the 3-D cameras included herein may have an FOV of 20 degrees to 180 degrees. In some embodiments, the 3-D cameras included herein may have an FOV of 35 degrees to 70 degrees. Further, some examples can include at least one of a first camera and a second camera with a FOV that is differently shaped, sized, and/or oriented than at least one of the illustrated FOVs. For example, at least one of a first FOV and a second FOV can extend from the respective camera with a wider or narrower viewing angle than as illustrated. Additionally or alternatively, the FOV of at least one camera may be asymmetrical.

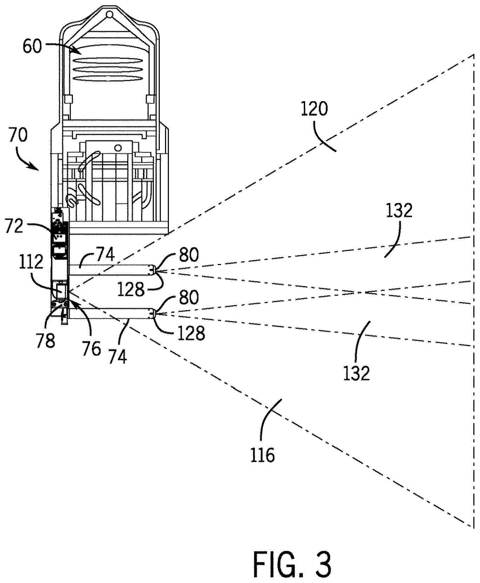

With continued reference to FIG. 1, the MHV can include at least one fork tip sensor 128 positioned proximate the fork tip 80 of at least one of the forks 74. For example, the MHV can include at least one fork tip sensor 128 mounted in or on the fork tips 80. Each fork tip sensor 128 may detect the presence or absence of an object within a tip sensor FOV 132 (see, e.g., FIG. 3), which may extend from the fork tip sensor 128 in a direction away from the load backrest 78 (e.g., in front of the fork tips 80). Additionally, in some examples, a portion of at least one tip sensor FOV 132 can be angled laterally inward to extend in the direction of the other fork 74, which may be helpful to detect the presence of an object between the two forks 74. In some examples, a portion of a tip sensor FOV 132 may extend laterally between the two forks 74. Additionally or alternatively, each of the fork tip sensors 128 may include a plurality of individual sensors arranged in an array. For example, individual sensors can be arranged laterally along the fork tip 80 from an outer edge toward an opposing inner edge, the inner edge being closer to the opposing fork 74 than the outer edge.

In some examples, at least one of the individual sensors arranged proximate the inner edge of a fork may be angled laterally inward (e.g., toward a centerline between the forks 74 or the opposing fork 74). For example, a center fork tip sensor can be configured to detect a center stringer (or any other object) between the two forks 74. In some examples, at least one fork tip sensor 128 can be (or can include) at least one of a time-of-flight sensor (e.g., a LiDAR sensor), a camera, and any other type of object detection sensor. It should also be appreciated that some examples can include at least one fork tip sensor with a tip sensor FOV that is differently shaped, sized, and/or oriented than the illustrated tip sensor FOVs 132. For example, at least one tip sensor FOV can extend from a fork tip sensor with a wider or narrower viewing angle than as illustrated. Additionally or alternatively, at least one tip sensor FOV may be asymmetrical.

The MHV 60 may include one or more load seated sensors 142 to detect if a load is seated on and fully received by the forks 74. A load may be considered to be fully seated onto the forks 74 when the load contacts the load backrest 78 and/or when the nearest face of the pallet is within a configured distance of the load backrest. For example, a load seated sensor 142 can be attached to, or arranged on the same vertical plane as, the load backrest 78, and may be configured to detect when a load has been fully seated onto the forks 74. The load seated sensor 142 can be a mechanical sensor or switch, a time-of flight-sensor, or any other object detection or position-sensing sensor. Additionally, at least one weight sensor can be configured to determine the weight of a load carried by the MHV 60 and may be incorporated into at least one of a fork 74, the load backrest 78, or any other part of the fork assembly 70 and the MHV 60.

In some examples an accelerometer 601 may be installed proximate the first or second cameras. The accelerometer 601 may be used in combination with a timer and/or the controller 150 to account for a predetermined amount of "settle time" for the MHV 60. The accelerometer 601 may determine an oscillation frequency of the mast and/or forks. For example, as the MHV moves and then comes to a stop, the fork carriage 70 and/or mast can oscillate due to the momentum of the MHV, and this oscillation may cause inaccuracies in imaging via the cameras 104, 108. To account for this oscillation, the MHV 60 may wait a predetermined "settle time" for the oscillation to damp. In one example, the "settle time" is calculated by the controller 150 based on a load weight (e.g., via the weight sensor) and a height of the forks 74. In other embodiments, the MHV may not include a timer and may instead only utilize the accelerometer 601 to determine a "settle time." For example, the controller 150 may monitor the accelerometer 601 to confirm that the oscillation has damped out to a predetermined level before imaging with the cameras 104, 108.

In one example, a first inclination sensor 608 may be located proximate the accelerometer 601 on the moveable assembly 112. Additionally, a second inclination sensor 609 may be located on the mast of the MHV. The inclination sensors 608, 609 may be used to measure an angle (e.g., angle away from vertical) to account for lateral offset between the forks 74 and the platform. In one example, the controller 150 may use information from the inclination sensors 608, 609 to calculate an angular difference between the forks 74 and the platform, which can enable the controller 150 to accommodate for the angular difference between the forks 74 and the platform.

As described previously, the second camera 108 may be located on moveable and/or drop-down assembly 112, which selectively positions the second camera 108 in a second position, below a load 604, when the forks 74 are elevated off the ground. For example, a second camera 108 may be included in (or on) a moveable assembly mounted to the load backrest 78. The assembly may further include an actuator 107 coupled to a movable section 109 of the assembly 112. The actuator 107 can be an electric actuator, a hydraulic actuator, gravity actuated, and/or any other type of actuating system or device to selectively move the assembly 112 including the second camera 108 relative to the fork assembly 70.

A fork position sensor 602 may be installed within a portion of the load backrest 78 of the MHV 60. The fork position sensor 602 may be configured to determine when the forks are in a predetermined position, such as an extended and/or retracted position. A load beam sensor 603 may be installed adjacent the fork position sensor 602. In one example, the load beam sensor 603 is mounted via an adjustable bracket to enable an operator to adjust a view angle of the load beam sensor 603. The load beam sensor 603 may be configured to determine when a load beam of a pallet rack is within a predetermined distance from the forks 74 of the MHV 60.

In some examples, at least one of the first camera, the second camera, the fork tip sensors, the accelerometer, inclinometers, load beam sensor, fork position sensor, and a load seated sensor can be positioned in a different location than those of the examples described above. For example, at least one of the first camera and the second camera may can be positioned proximate a side of the backrest, over (or in) a fork, on the MHV, and/or in any other location on the fork assembly or the MHV. Additionally or alternatively, the MHV can include at least one additional sensor, which may be the same or different than those described above. For example, the MHV can include at least one additional camera, fork tip sensor, and/or any other object detection sensor.

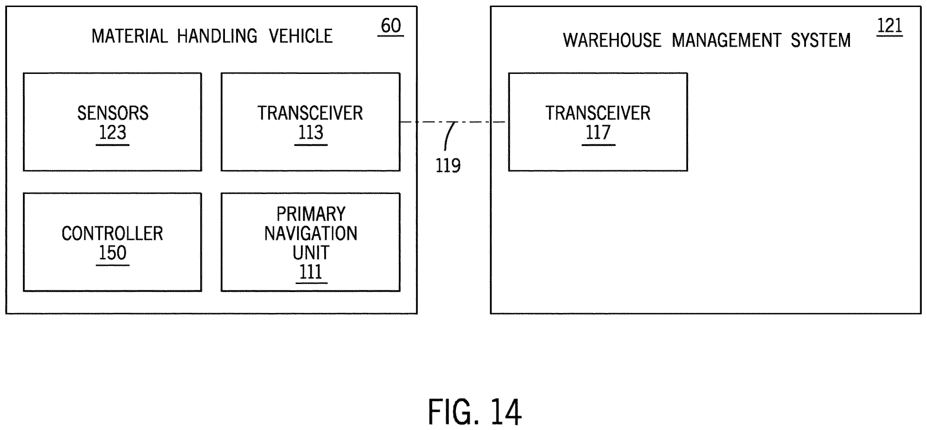

Still referring to FIG. 1, the MHV 60 can include a controller 150 that is in communication with one or more sensors 123. For example, the one or more sensors 123 may include at least one of the first camera 104, the second camera 108, at least one fork tip sensor 128, the load seated sensor 142, the load beam sensor, the accelerometer, the fork position sensor, the inclinometers, the weight sensor, and any other type of sensor (e.g., a fork height sensor) or input device. With reference to FIG. 14, the controller 150 may also be in communication with a warehouse management system (WMS) 121 and primary navigation unit 111, which may include at least one additional sensor or locating apparatus that allow the MHV 60 to be an automatically guided. For example, the MHV 60 may include a transceiver 113 that may communicate with a transceiver 117 of the WMS 121 via a wired and/or wireless communication link 119 (e.g., Wi-Fi, ethernet, Bluetooth, etc.,). In one example, a primary navigation unit 111 can include at least one of cameras, global positioning systems (GPS), rotating laser scanners, motion sensors, LiDAR systems, simultaneous localization, and mapping (SLAM) systems, spot navigation systems using radio-frequency identification (RFID) or magnets, and wire guidance systems. In some embodiments, the controller 150 can be in the MHV or the primary navigation unit.

Generally, the MHV disclosed herein may use data communicated to a controller and/or the primary navigation unit by the at least one of a WMS, connected sensors, and an operator to control a MHV to pick-up or drop-off a load.

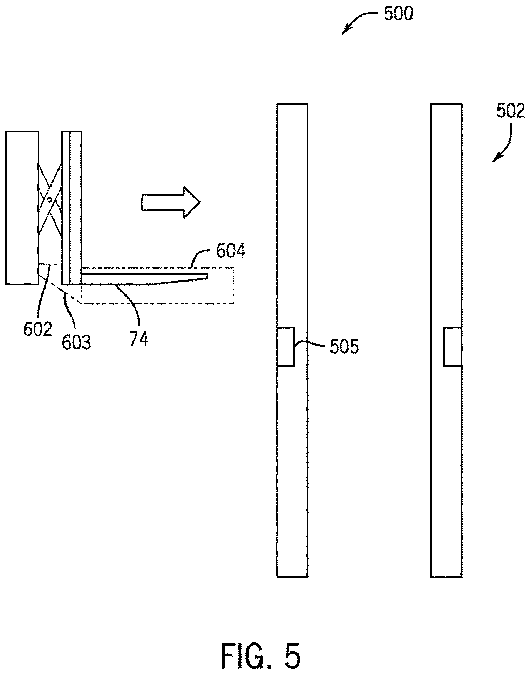

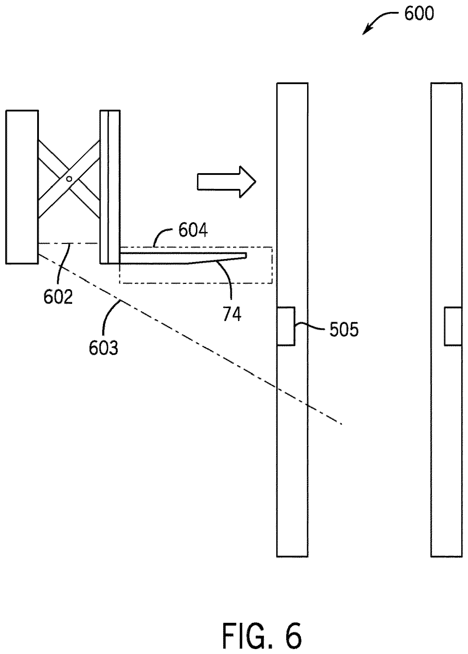

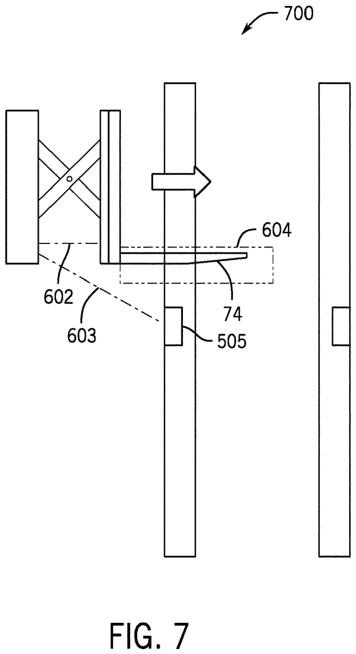

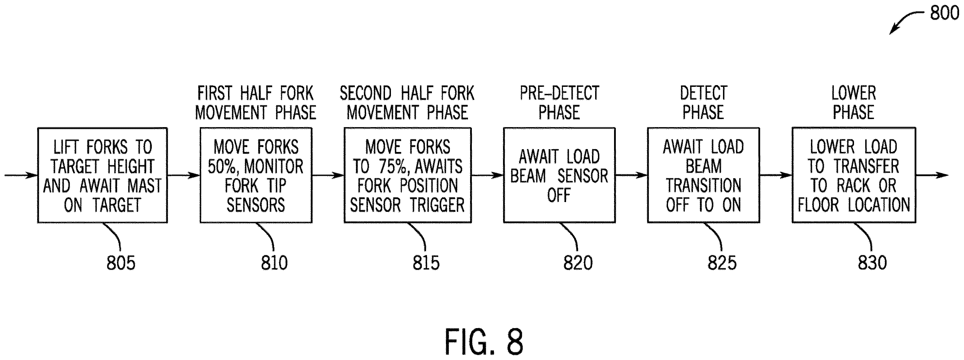

FIGS. 5-7 show examples of the fork position sensor 602 and the load beam sensor 603 in use. At stage 500, the fork position sensor 602 indicates that the forks 74 are not yet in the predetermined reached state and the load beam sensor 603 indicates that the sensor is blocked and cannot detect the load beam 505 of the pallet rack 502. At stage 600, the fork position sensor 602 indicates that the forks 74 are in the reached and/or extended state and the load beam sensor 603 indicates that the load beam 505 is not detected (e.g., not within the predetermined distance). Thus, the MHV 60 continues to move the forks toward the pallet rack 502. In the event that the load beam sensor 603 detects an object within the predetermined distance simultaneously with the fork position sensor 602 indicating the forks 74 are in the reached state, a message may be generated. For example, this simultaneous detection of an object and the forks being in the reached state may be interpreted as a false detection of plastic wrap and/or another object. In this case, the load beam sensor 603 may trigger a message and can stop movement of the MHV 60. At stage 700, the fork position sensor 602 indicates that the forks 74 are in the reached and/or extended state and the load beam sensor 603 indicates that the load beam 505 is detected and within the predetermined distance. In another example, the load beam sensor 603 detecting an object within the predetermined distance simultaneously with the fork position sensor 602 indicating the forks 74 are reached may not generate a message. Instead, a message may be generated when the MHV 60 does not enter a pre-detection phase (e.g., stage 820 in FIG. 8) due to an object, such as plastic wrap and/or another object triggering the load beam sensor 603 prior to a transition from an awaiting reach phase.

An example pick and/or drop process utilizing the fork position sensor 602 and the load beam sensor 603 is shown via process 800 of FIG. 8. At stage 805, process 800 includes raising the forks 74 to a target height. The MHV 60 may determine the target height based on information from the cameras 104, 108 and/or other sensors. At stage 810 the MHV begins moving (e.g., traversing, reaching, and/or driving) towards the target drop location while monitoring the fork tip sensors for potential interferences. For example, the fork tip sensors may monitor the drop location to be sure the drop location is empty (e.g., free from other loads/pallets). At stage 815, the MHV 60 begins to reach the forks 74 while monitoring the fork position sensor 602 via the controller 150. Once the fork position sensor 602 indicates that the forks 74 are fully reached the MHV 60 continues to move towards the drop location at stage 820, while monitoring the load beam sensor 603. At stage 825 the controller 150 determines when the load beam sensor 603 changes status from off to on indicating that the load beam 505 is detected and within the predetermined zone. If the load beam sensor 603 determines that an object is too close, such as plastic wrap from the load, the controller 150 may stop the MHV 60 and send a message. At stage 830, the MHV 60 begins to lower the load onto the pallet rack and/or floor to complete the drop process.

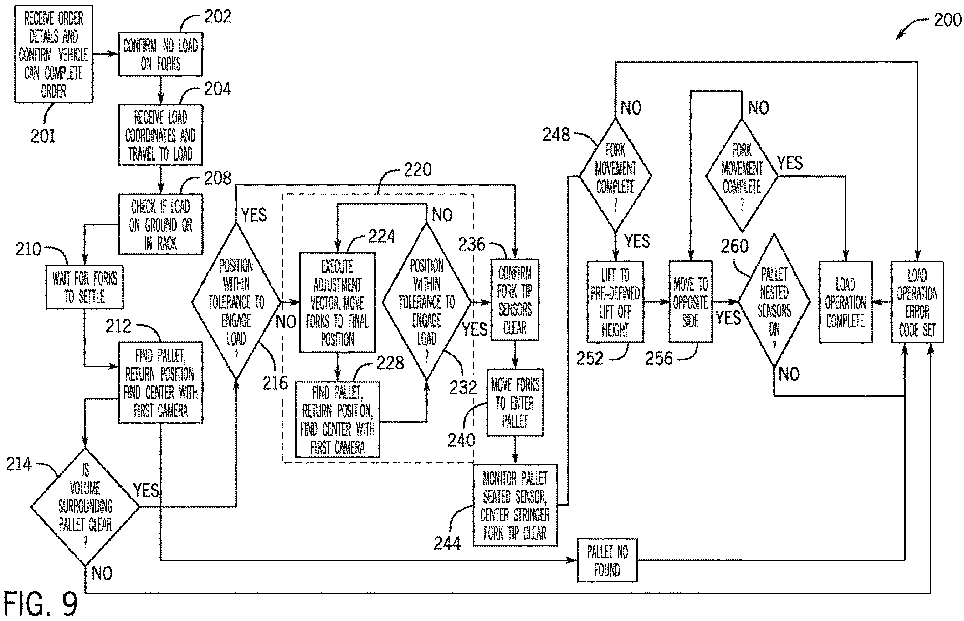

FIG. 9 illustrates a method 200 for picking up a load using the MHV 60 described above with reference to FIGS. 1-4. At stage 201 the MHV may receive pick and/or place order details from the controller 150 via a warehouse management system and/or an operator and confirm the vehicle is capable of handling the order. For example, the vehicle may determine if the weight of the load is within the rated capacity of the vehicle and/or that the elevated height of the load is within the height limit of the vehicle. The MHV may then confirm whether the vehicle can accept the pick/place order, such as by monitoring the weight sensor, load nested sensor, first camera, second camera, and/or any other sensor to determine whether or not a load is currently positioned on the forks. If the forks are confirmed to be free from any load at stage 202 the MHV indicates to the controller and/or warehouse management system that the MHV can accept the pick/place order. At stage 204 the MHV receives load coordinates to pick up the load and begins to travel to the load. More specifically, information about the load can be provided to the controller 150 from, for example, the WMS. The target load information may include at least one of a grid location (e.g., an X-Y position) of the load, whether the load is stored on the floor or on a rack, the height of the load pick up location (e.g., a rack height), the dimensions of the load, the weight of the load, and any other information about the load, the pick-up location, a drop-off location, or operational parameters for the MHV 60. The MHV 60 can then travel autonomously to the X-Y position of the load. In some examples, the height sensor may communicate a height of the forks 74 to the controller 150 to determine if the load handling procedures described herein may occur at height (e.g., above ground level).

The method 200 may further comprise checking if the load is on the ground or in a rack (or on an elevated structure) at stage 208, which may be done by the controller 150. This operation may include, for example, determining if the target load is on a rack based on a height coordinate provided in stage 204. Additionally or alternatively, data acquired from at least one of the first camera 104, the second camera 108, a fork tip sensor 128, any other object detection system on the MHV 60, and any other information communicated to the controller 150 may be used to determine if the load is on the ground or in a rack. In some embodiments, the controller 150 on a MHV 60 can be configured to perform the stage 208 of checking if the load is on the ground or in a rack before the MHV 60 has moved to the location of the load, while the MHV 60 is moving to the location of the load, once the MHV arrives at the location of the load, or any combination thereof.

At stage 210, a camera, such as the first camera 104, second camera 108, and/or another, separate, camera is employed to capture an image and locate an object within that image. In one example, the camera returns the position of the imaged object relative to the position of the camera. The MHV has been calibrated to know the exact position of the camera with respect to the movable components of the MHV. To confirm the images are taken from the calibrated position, the MHV 60 can wait a predetermined "settle time" for oscillation of the MHV to damp. In one example, a timer is employed to wait for any oscillations to damp out before capturing an image. This timer may be variable and determined by the current lifted height of the MHV, load weight, and/or a combination thereof. In another example, an accelerometer may be used to determine when the amplitude of the oscillations has attenuated to a predetermined level before imaging.

After the forks have settled to a predetermined level of oscillation, the method 200 locates a pallet on which the target load is supported at stage 212. For example, in some examples, the first camera 104 may identify a center of the pallet by identifying a center stringer of the pallet. This operation may include moving the fork assembly 70 so that the pick-up location of the load is in the first FOV 116 of the first camera 104. Additionally or alternatively, some examples can be configured to use at least one of the second camera 108, a fork tip sensor 128, and any other object detection system to identify a pallet supporting the target load. If the pallet is unable to be located, the controller 150 may set a code or send a message.

At stage 214, the MHV performs a volume check operation to assure adequate clearance around the load. For example, as a MHV lifts a load and the weight of the load transfers from bearing on one surface (e.g., a rack load beam) to the forks 74 of the MHV 60, the MHV may be subject to mechanical deflection, such as lateral and/or vertical deflection. For this reason, the vehicle assesses the volume surrounding the load to confirm the volume is free from obstructions to ensure the load will not contact any nearby object should deflection occur. In one example, the vehicle uses a camera, such as the first camera 104, second camera 108, and/or another camera to evaluate a volume beginning at a left edge of the load and extending for a distance equal to the maximum amount of lateral deflection the vehicle is expected to experience. Then the same assessment is made for the right side of the load. If an object is detected in either of these volumes, the vehicle may not proceed with an automated pick. In one example, the maximum amount of lateral deflection is calculated as the maximum observed lateral deflection under load plus the sine of the maximum observed roll of the forks multiplied by the height of the load.

Once the pallet is located and the MHV has determined the volume around the pallet is acceptable, the material handling vehicle 60 may determine if the pallet is positioned within a predefined tolerance for the forks 74 to engage the load in stage 216. For example, the controller 150 may determine if the centers of the forks 74 are substantially aligned with the centers of the pallet pockets positioned on opposite sides of the center stringer. In some embodiments, the predefined tolerance may be a position of the pallet (e.g., X, Y, and Z coordinates; roll, pitch, and yaw) relative to the forks 74.

If the pallet is not within the predefined tolerance relative to the forks 74, the position of the forks 74 may be corrected in stage 220. In some embodiments, correcting the position of the forks can include executing an adjustment vector that adjusts a position of the forks 74 relative to the detected pallet position at stage 224. An adjustment vector may include at least one of moving the MHV 60, moving the fork assembly 70 relative to the MHV 60, and moving the forks 74 on the fork assembly 70. After the adjustment vector has been executed, the first camera 104 can re-identify the center of the pallet by identifying the center in stage 228 and can then determine if the adjustment vector moved the forks 74 into a position to engage the pallet (e.g., in alignment with the pallet pockets) at stage 232. Stage 232 may be performed using the same or a different position-detection process than the process used in stage 212. In some embodiments, a fork position correction stage 220 can be performed multiple times (e.g., to incrementally correct the fork position) and stages 224, 228, and 232 may be repeated. However, some position correction stages may be performed only once without any repetition of stages. In some embodiments, the controller 150 can be configured to set a code or send a message if the pallet position is completely outside of a maximum adjustment vector range.

When it is determined that pallet position is within the predefined tolerance, the fork tip sensor(s) 128 may be configured to verify that the forks 74 are aligned with the empty space between the pallet stringers in stage 236. For example, if the fork tip sensors 128 do not detect an object in their respective tip sensor FOV 132, it is confirmed that the forks 74 are properly aligned between the pallet stringers. The controller 150 may subsequently instruct the forks 74 to move (e.g., traverse and/or reach) into the pallet pockets formed between the pallet stringers in stage 240. While the forks 74 are moving into the pallet pockets, the controller 150 may monitor the progress of the forks 74 in stage 244. For example, the controller 150 can monitor at least one of the load seated sensor(s) 142, the pallet center stringer (using, for example, the first camera 104), and the fork tip sensor(s) 128 to check that the forks 74 are moving (e.g., traversing, driving, and/or reaching) properly into the pallet pockets. Additionally or alternatively, the controller 150 may monitor and/or measure a distance traveled by the forks 74. In another example, the controller may receive one or more signals from the fork position sensor 602 and/or the load beam sensor 603. The fork position sensor 602 may indicate to the controller 150 when the forks 74 are in the fully extended position. As the forks extend, the load beam sensor 603 is able to sense a load beam 505, such as a load beam in a pallet rack 502 to determine a desired movement and/or position of the MHV 60.

The MHV 60 may check if the movement (e.g., traversal, drive, and/or reach) of the forks 74 is complete in stage 248. For example, the controller 150 can determine if the load seated sensor(s) 142 detect that the load is fully received on the forks 74. If the load seated sensors 142 do not detect that the load is fully seated, a code may be set. If the load seated sensors 142 detect that the load is fully received on the forks 74, the controller 150 may instruct the fork assembly 70 to raise to a predefined lift-off height to engage and raise the load in stage 252.

Once the fork assembly 70 has been raised the predefined lift-off height, the controller 150 may instruct the forks 74 to move (e.g., retract) toward the vehicle body (e.g., back into a retracted position) to remove the load from the pick-up location in stage 256. While the forks 74 are returning to the retracted position, the controller 150 may monitor the load seated sensors 142 to ensure that the load remains fully seated on the forks 74 in stage 260. If the load seated sensors 142 indicate that the load is not fully seated as the forks 74 are moving, a code may be set (or a message may be sent) by the controller 150. Once the forks 74 have substantially or completely moved (e.g., retracted) back to the retracted position, the load picking operation may be completed. In some embodiments the MHV 60 may travel to a desired location to drop-off the load.

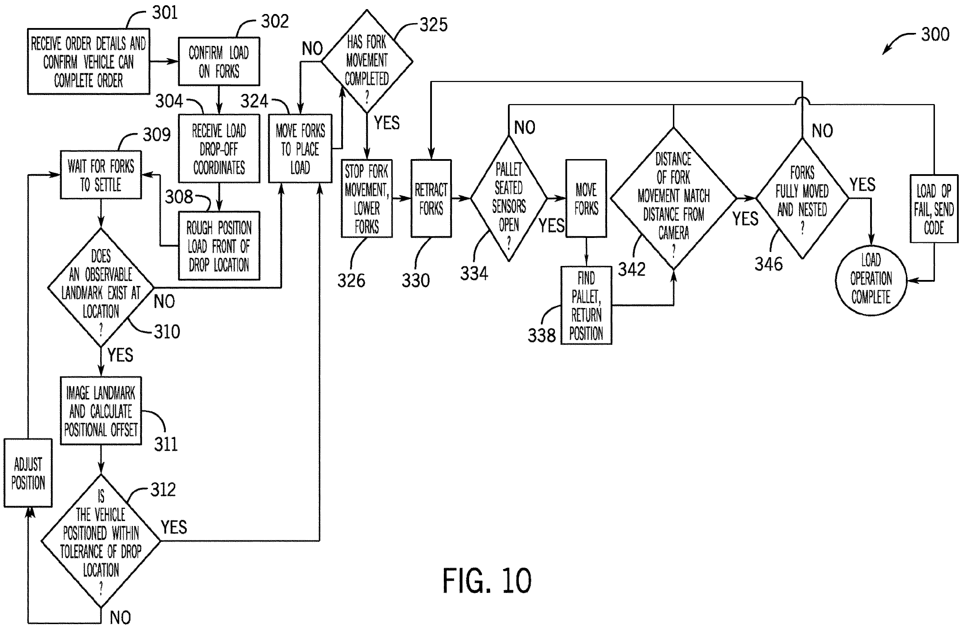

FIG. 10 illustrates a method 300 for dropping off a load on a ground surface using the MHV 60 described above with reference to FIGS. 1-4. At stage 301 the MHV may receive pick and/or place order details from the controller 150 via a warehouse management system and/or an operator. The MHV may then confirm whether the MHV currently has a load on the forks 74, such as by monitoring the weight sensor, load nested sensor, first camera, second camera, and/or any other sensor to determine whether or not a load is currently positioned on the forks. If the forks are confirmed to have a load on them at stage 302, the MHV can indicate to the controller and/or warehouse management system that the MHV 60 can accept the pick/place order. At stage 304 the MHV 60 receives drop coordinates to drop the load and begins to travel to the drop location. Initially, load drop-off coordinates (e.g., an X-Y position of a drop-off location) may be provided wirelessly to the controller 150 from, for example, a warehouse management system (WMS) at stage 304. Once the controller 150 receives the load drop-off coordinates, the MHV 60 may travel to the X-Y position of the drop-off location and can roughly position the carried load in front of a destination pocket (e.g., the forks 74 are aligned relative to the height of the drop-off location) at stage 308.

At stage 309, a camera, such as the first camera 104, second camera 108, and/or another, separate, camera is employed to capture an image and locate an object within that image. In one example, the camera returns the position of the imaged object relative to the position of the camera. The MHV has been calibrated to know the exact position of the camera with respect to the movable components of the MHV. To assure the images are taken from the calibrated position, the MHV 60 can be configured to wait a predetermined "settle time" for oscillation of the MHV to damp. In one example, a timer is employed to wait for any oscillations to damp out before capturing an image. This timer may be variable and determined by the current lifted height of the MHV, load weight, and/or a combination thereof. In another example, an accelerometer may be used to determine when the amplitude of the oscillations has attenuated to an acceptable level before imaging.

With the load roughly positioned, the controller 150 may access a fork-side object detection sensor (e.g., an object detection sensor positioned such that the viewing angle covers the area of space to be occupied by the load on the forks 74). In some cases, a landmark is available to more precisely locate a load drop location such as a rack upright and/or the structure of a pick and drop station at stage 310. In one example, the second camera 108 may capture an image of this feature and refine its positional offset to more precisely place the load in the intended location at stage 311. The controller 150 may subsequently determine if the MHV 60 is positioned within a predetermined tolerance of the intended drop location at stage 312. For example, the controller 150 may monitor one or more cameras and/or the one or more sensors to determine if the MHV 60 is within the predetermined tolerance. If the MHV 60 is not within tolerance, the MHV may adjust and repeat the process until within the predetermined tolerance. After it is determined that the predetermined tolerance is met, the MHV 60 may move to the load drop-off location at stage 324. At stage 325 the MHV may monitor the fork position sensor 602 to determine whether the load handling operation (e.g., traverse, reach, and/or drive) is complete. When the forks 74 reach the desired drop-off location, the forks 74 may stop and subsequently lower at stage 326. In some examples, using a weight sensor, the controller 150 may determine if the weight on the forks 74 decreases as they are lowered in order to determine when the ground engages the load. Once the load is substantially or completely supported by the ground, downward movement of the forks 74 may cease. Additionally or alternatively, the downward movement of the forks 74 may be stopped after a predetermined distance, or using any other sensors, processes, or criteria.

Once the forks 74 have been lowered, the forks 74 can be retracted away from the load and toward the vehicle body at stage 330. As the forks 74 return to the retracted position, the controller 150 may determine if the load is being dragged by checking at least one load seated sensor 142 at stage 334. For example, if the load seated sensors 142 are closed (e.g., a load is still fully seated on the forks 74), the controller 150 can be configured to set a code or send a message. If the load seated sensors 142 are open (e.g., indicating that a pallet/load is not fully seated on the forks 74), then the forks may continue to retract away from the load to a predetermined distance.

After the forks 74 have moved (e.g., traversed, reached, and/or moved) a predetermined distance from the load, the first camera 104 may capture an image of the placed load at stage 338, and the controller 150 can attempt to locate the pallet/load on the pallet in the image. At stage 342, the controller 150 may then determine if the predetermined distance moved (e.g., traversed, traveled, and/or reached) by the forks 74 matches the distance from the load backrest 78 to the load/pallet that was measured in one or more images from the first camera. If the distances do not match, the controller 150 may be configured to set a code or send a message. If the distances do match, or are within a predefined tolerance of one another, the controller 150 may determine if the forks 74 are fully retracted at stage 346. If the forks 74 are not fully retracted, the forks 74 may continue to retract. If the forks 74 are fully retracted, the unloading operation is complete and the MHV 60 may continue on to another task.

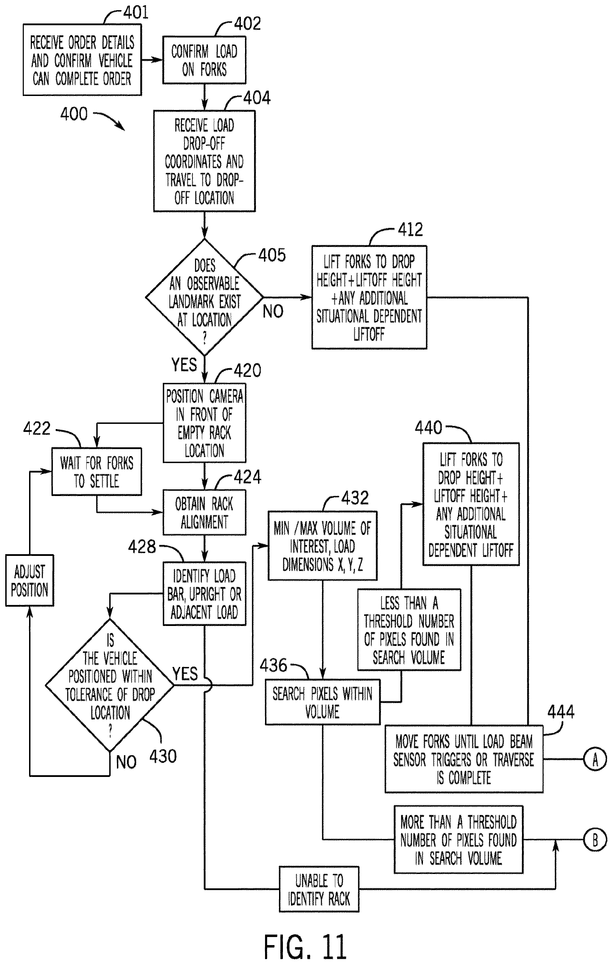

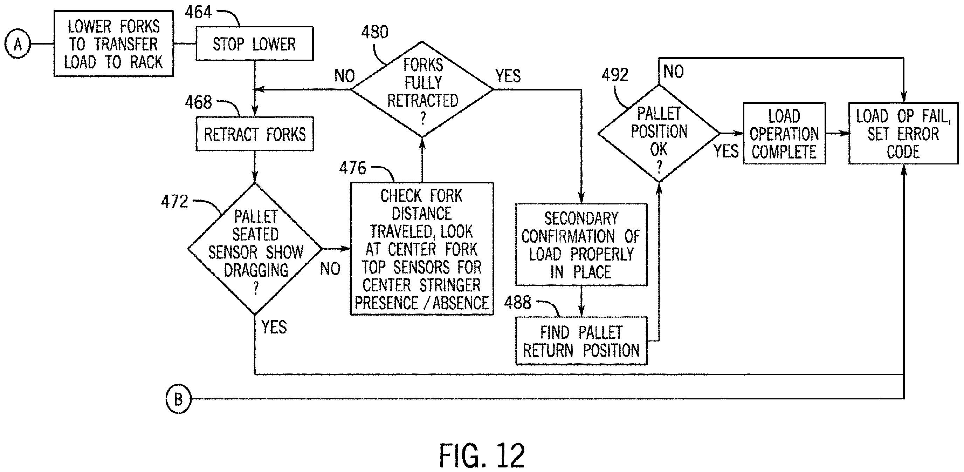

FIGS. 11 and 12 illustrate a method 400 for dropping off a load onto a rack or raised platform using the MHV 60 described above with reference to FIGS. 1-4. At stage 401 the MHV may receive pick and/or place order details from the controller 150 via a warehouse management system and/or an operator. The MHV 60 may then confirm whether the vehicle currently has a load on the forks 74, such as by monitoring the weight sensor, load nested sensor, first camera, second camera, and/or any other sensor to determine whether or not a load is currently positioned on the forks 74. If the forks are confirmed to have a load on them at stage 402 the MHV 60 indicates to the controller and/or warehouse management system that the MHV can accept the pick/place. Similar to method 300 described above, load drop-off coordinates (e.g., an X-Y position and height of a drop-off location) may be provided wirelessly to the controller 150 from, for example, a WMS at stage 404. Accordingly, the MHV 60 may travel autonomously to the X-Y position of the drop-off location.

In some cases, a landmark is available to more precisely locate a load drop location such as a rack upright and/or the structure of a pick and drop station at stage 405. In one example, the second camera 108 may capture an image of this feature and refine its positional offset to more precisely place the load in the intended location. The second camera 108 may be roughly positioned in front of the drop-off location on the rack at stage 420 by moving at least one of the MHV 60 and the fork assembly 70 relative to the rack. At stage 422, a camera, such as the first camera 104, second camera 108, and/or another, separate, camera is employed to capture an image and locate an object within that image. In one example, the camera returns the position of the imaged object relative to the position of the camera. The MHV has been calibrated to know the exact position of the camera with respect to the movable components of the MHV. To assure the images are taken from the calibrated position, the MHV 60 can be configured to wait a predetermined "settle time" for oscillation of the MHV to damp. In one example, a timer is employed to wait for any oscillations to damp out before capturing an image. This timer may be variable and determined by the current lifted height of the MHV, load weight, and/or a combination thereof. In another example, an accelerometer may be used to determine when the amplitude of the oscillations has attenuated to a predetermined level before imaging.

An image may then be acquired from the second camera 108, and the acquired image can be used to obtain the rack alignment at stage 424. For example, the controller 150 can use the second camera 108 to determine lateral alignment relative to the racking structure (e.g., left alignment or right alignment). Further, in some embodiments, the second camera 108 may be used to search for a racking junction of an upright beam and a load beam. In some cases, a landmark is available to more precisely locate a load drop location such as a rack upright and/or the structure of a pick and drop station before the positioning of the MHV. In one example, the MHV's second camera may capture an image of this feature and refine its positional offset to more precisely place the load in the intended location. If the racking junction is found, the position of the racking junction relative to the second camera 108 may be calculated at stage 430, and the position of at least one of the forks 74, may be adjusted based on the location of the load junction. Furthermore, in one example this adjusted location is biased to compensate for the difference in inclination angle between the camera taking the image and the lift mechanism which actuates a lift movement. In this example, a first inclination sensor 608 located proximate the camera measures the inclination angle of the camera capturing the image. A second inclination sensor 609 is located on the lift mechanism and measures the inclination angle of the lift system. Any difference between these two measurements will result in lateral error approximately equal to:

$$\text{Lift distance} * \sin(Inclination\ angle\ 1 - Inclinaiton\ angle\ 2)$$

Once the rack is identified, one or more of the identified features may be used to quantify a minimum volume of interest and a maximum volume of interest at stage 432. For example, a minimum and/or maximum volume of interest may be based on the load dimensions, a lift off height, and a buffer of spacing desired between loads and between load and rack upright. In some embodiments, the load dimensions (e.g., length, width, and height) may be predetermined values known by the controller 150. Additionally or alternatively, the load dimensions may be supplied to the controller 150 by the WMS and/or any other source of information. Further, the controller 150 may compare the defined volume of interest to the volume of unoccupied space at the drop-off location, which may be measured by the second camera 108.

Once the minimum and maximum volumes of interest have been quantified, and it has been determined that the load may fit therein, the second camera 108 may verify that the search volume is empty (e.g., by analyzing pixels in an image for indications of an object) at stage 436. If an object or another structure is detected (e.g., by the presence of a predetermined amount of pixels having an intensity indicative of an object/structure), the controller 150 may set a code or send a message. If the search volume is determined to be empty, then the forks 74 may be raised to a final drop-off height at stage 440.

While the forks 74 are being moved (e.g., traversed, reached, and/or driven) toward the drop off location, the controller 150 may monitor the fork position sensors 602 to identify a transition from a blocked state to an unblocked state at stage 444. Alternatively or additionally, the sensors may be configured to detect when the forks are fully extended. When (or as) the forks 74 are moving (e.g., traversing, reaching, driving) into the rack, the controller 150 may monitor at least one fork tip sensor 128 in order to ensure that the forks are not approaching an existing pallet. For example, the controller 150 may determine if at least one center fork tip sensor is blocked. If a fork tip sensor is blocked, which may indicate that a fork 74 is approaching another pallet, the controller 150 may set a code or send a message. Additionally or alternatively, the controller 150 can be configured to determine if the pallet is being pushed. For example, the distance to a pallet may be measured and compared to the distance the forks 74 have moved. In some embodiments, the same or a different push detection method may be implemented when a pallet is being picked up.

As the forks approach the rack for placement of the load, a fork position sensor 602 can be evaluated to determine if the forks are in a position that provides a clear field of view for the load beam sensor 603. In one example, the forks position sensor 602 triggers when the forks are positioned at the end of their reach stroke. After the forks position sensor 602 determines the forks are positioned to provide the load beam sensor 603 a clear field of view, the MHV 60 can begin assessing the state of the load beam sensor 603. In one example, if the first reading assessed from the load beam sensor 603 is less than a threshold distance, the MHV 60 can be configured to stop the load handling operation and display a message. This situation can be indicative that some part of the load is interfering with the load beam sensor 603, such as a hanging piece of debris or stretch wrap. If the MHV controller assesses the load beam sensor 603 to measure a distance greater than a threshold distance, the MHV 60 can be configured to continue moving the forks, so the load approaches the drop location until the load beam sensor measurement transitions from greater than to less than a threshold distance. This transition signals the detection of the surface upon which the vehicle intends to place the load and the MHV ceases moving the forks toward the drop location.

If the forks 74 remain unblocked and have moved (e.g., traversed, reached, driven) into the rack a predetermined distance or until the load beam sensor detects the drop surface, then the extension of the forks 74 may be stopped, and the forks 74 may be lowered a predefined distance. In some embodiments, the predefined distanced can be based on at least one of a load weight, which may have been measured using a load weight sensor or provided to the controller 150 by the WMS, and the predefined offset height above the load beam. For example, as the forks 74 are lowered, the controller 150 may determine if the weight on the forks 74 decreases, which may indicate that the load is supported by the rack. Additionally or alternatively, the controller 150 may compare a preset lowering distance, which can be based on at least one of the transition height value and a predefined offset value, to the distance the forks 74 have been lowered. Once it is determined that the weight on the forks 74 has decreased and the preset lowering distance is met, downward movement of the forks 74 can be stopped in stage 464, and the forks 74 may be retracted back toward the retracted position (e.g., out of the rack and toward the vehicle body) at stage 468. If, however, the weight on the forks 74 does not decrease as they are lowered and/or the preset lowering distance is not met, then the controller 150 may set a code or send a message.

As the forks are being retracted, the controller 150 may monitor at least one load seated sensor to determine if the pallet is dragging at stage 472. For example, if the load seated sensors 142 remain closed after a predetermined amount of time (providing a positive indication of pallet dragging), movement of the forks 74 may be stopped and the controller 150 may set a code or send a message. If the load seated sensors 142 switch to an open state (e.g., indicating that a load is not seated on the forks 74), the retraction of the forks 74 may continue.

The controller 150 can also be configured to monitor a distance that the forks 74 are retracted. For example, the first camera 104 may be used to measure a distance between the load and the first camera 104 and/or the load backrest 78 to determine a distance the forks 74 have been retracted. In some embodiments, the controller 150 may compare a distance moved (e.g., traversed, driven, and/or reached) by the forks 74 (as measured by using another method or sensor) to determine if it matches the distance from the load backrest 78 to the load/pallet that was measured in the first camera image. Additionally or alternatively, the controller 150 may check at least one fork tip sensor 128 to determine if the pallet has been unloaded by monitoring a portion of the tip sensor FOV between the forks 74 (e.g., monitoring a center fork tip sensor) to determine if the center stringer on the pallet is still between the forks 74. Based on at least one of the monitored retraction distance and the presence/absence of the center stringer being sensed by a center fork tip sensor, the controller 150 can determine if the forks 74 have been fully retracted at stage 480. If they have not been fully retracted, the forks 74 may continue to retract, and the controller 150 may continue to monitor pallet dragging, the retraction distance, and for the presence/absence of the center stringer. In some embodiments at least one of stages 472, 476, and/or 480, and any other stages for checking for pallet dragging and/or measuring retraction distance can be performed at least once.

When the forks 74 have fully retracted, the controller 150 may perform a secondary confirmation of the load placement using the first camera 104 at stage 488. At least one of the first camera 104 and the second camera 108 may capture an image of the load, which may be used to locate the pallet and/or the load in order to determine a load position. The controller 150 may determine if the measured load position matches the desired load drop-off coordinates within a predefined tolerance at stage 492. If the load position is within the predefined tolerance, the load operation is completed and the MHV 60 may perform another task. If the load position is not within the predefined tolerance, the controller 150 may set a code or send a message.

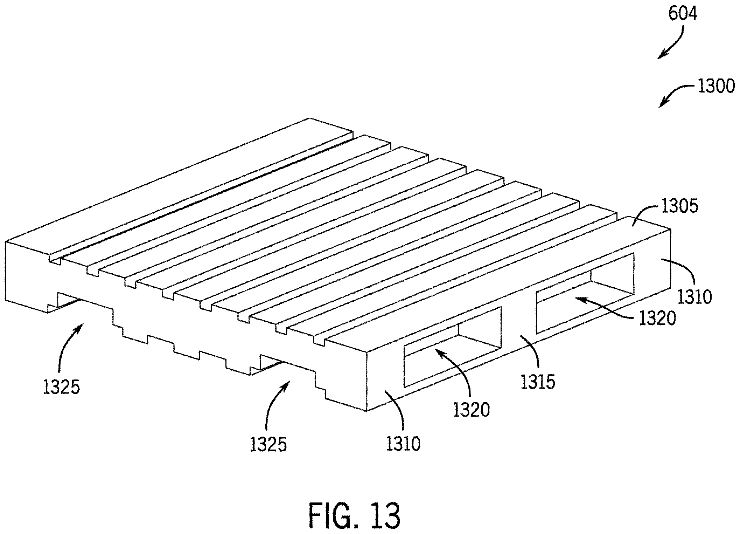

FIG. 13 shows an example of the load 604, such as a pallet 1300 for use with the MHV 60 as described above. The pallet 1300 may include a load deck 1305 to support a load in the form of goods and/or other loads. The load deck 1305 may be supported via one or more end supports or end stringers 1310 and a central support or central stringer 1315. The load deck 1305, the end supports 1310, and the central support 1315 together may form one or more primary openings 1320 configured to receive the forks 74 of the MHV 60. Additionally or alternatively, the load deck 1305, end supports 1310, and the central support 1315 together may form one or more secondary openings 1325 configured to receive the forks 74 of the MHV 60. In one example, the pallet 1300 may be made from a variety of materials, such as wood, composite materials, polymeric materials, metal, and/or any combination thereof.

It is expressly contemplated that any of the processes or stages described herein may be combined, eliminated, or reordered. In other embodiments, instructions may reside in computer readable medium wherein those instructions are executed by a processor to perform one or more of processes or stages described herein. As such, it is expressly contemplated that any of the processes or stages described herein can be implemented as hardware, firmware, software, including program instructions executing on a computer, or any combination of thereof. Accordingly, this description is meant to be taken only by way of example, and not to otherwise limit the scope of this invention.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

Also as used herein, unless otherwise limited or defined, "substantially parallel" indicates a direction that is within plus or minus 12 degrees of a reference direction (e.g., within plus or minus 6 degrees), inclusive. For a path that is not linear, the path can be considered to be substantially parallel to a reference direction if a straight line between end-points of the path is substantially parallel to the reference direction or a mean derivative of the path within a common reference frame as the reference direction is substantially parallel to the reference direction.

Also as used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together, is not an integral (or integrally formed) element.

Additionally, unless otherwise specified or limited, the terms "about" and "approximately," as used herein with respect to a reference value, refer to variations from the reference value of plus or minus 15percent or less, inclusive of the endpoints of the range. Similarly, the term "substantially equal" (and the like) as used herein with respect to a reference value refers to variations from the reference value of less than plus or minus 30percent inclusive. Where specified, "substantially" can indicate in particular a variation in one numerical direction relative to a reference value. For example, "substantially less" than a reference value (and the like) indicates a value that is reduced from the reference value by 30percent or more, and "substantially more" than a reference value (and the like) indicates a value that is increased from the reference value by 30percent or more.

The previous description of the disclosed embodiments is provided to enable any person skilled in the art to make or use the invention. Given the benefit of this disclosure, various modifications to these embodiments will be readily apparent to those skilled in the art, and the principles defined herein may be applied to other embodiments without departing from the spirit or scope of the invention. Thus, the invention is not intended to be limited to the embodiments shown herein but is to be accorded the widest scope consistent with the principles and novel features disclosed herein.

**Claims**

1. A material handling vehicle (60), comprising:

   a vehicle body, a mast (72), and at least one fork (74) extending from a load backrest (78) to a tip end (80), the at least one fork (74) being selectively movable relative to the vehicle body and configured to support a load (604); a first camera (104) secured to the load backrest and positioned proximate a top surface of the at least one fork (74), the first camera (104) to determine a position of an object in a first camera field of view (116); a second camera (108) secured to a moveable camera assembly, the second camera to determine the position of an object in a second camera field of view (120); a fork position sensor (602) secured to the mast, the fork position sensor (602) to determine whether the forks (74) are in an extended position or a retracted position; and a controller (150) in communication with the first camera (104), the second camera (108), and the fork position sensor (602), the controller (150) to control movement of the at least one fork (74) based on information from the first camera (104), the second camera (108), and the fork position sensor (602).

2. The material handling vehicle (60) of claim 1, wherein the first camera field of view (116) covers at least a portion of a bottom of the load (604) when the load (604) is supported on the at least one fork (74).

3. The material handling vehicle (60) of claim 1 or 2, wherein the second camera field of view (120) covers at least a portion of a top of the load (604) when the load (604) is supported on the at least one fork (74).

4. The material handling vehicle (60) of any of the claims above, wherein the second camera field of view (120) covers at least a portion of a bottom of the load (604) when the load (604) is supported on the at least one fork (74).

5. The material handling vehicle (60) of any of the claims above, wherein the second camera (108) is movable between a first position and a second position based on a location of the forks (74).

6. The material handling vehicle (60) of claim 5, wherein, in the first position, the second camera (108) is positioned vertically above the first camera (104).

7. The material handling vehicle (60) of claim 5 or 6, wherein, in the second position, the second camera (108) is positioned vertically below the first camera (104).

8. The material handling vehicle (60) of any of the claims above, further comprising:
a fork tip sensor (128) secured to the at least one fork proximate a tip end (80), the fork tip sensor (128) to detect a presence of an object within a fork sensor field of view extending in front of the tip end (80).

9. The material handling vehicle (60) of any of the claims above, further comprising:

an accelerometer (601) in electrical communication with the controller (150);
wherein the accelerometer (601) determines an oscillation frequency of the mast (72); and
wherein the controller (150) delays imaging via the first or second camera (104, 108) based on input from the accelerometer (601).

10. The material handling vehicle (60) of any of the claims above, further comprising:

a load beam sensor (603) mounted adjacent the fork position sensor (602);
wherein the load beam sensor (603) indicates to the controller (150) that a load handling operation of the material handling vehicle (60) is complete.

11. The material handling vehicle (60) of claim 10, wherein the load beam sensor (603) indicates that the load handling operation is complete upon sensing a load beam (505) of a storage device.

12. The material handling vehicle (60) of any of the claims above, further comprising:

a timer in electrical communication with the controller (150);
wherein the timer begins a settle time countdown upon each stop of movement of the material handling vehicle (60); and
wherein the controller (150) delays imaging via the first or second cameras (104, 108) until after the timer has ended.

13. A method of dropping off a load supported by a material handling vehicle (60), comprising:

guiding, via a controller (150), the material handling vehicle (60) to a drop-off location provided by a warehouse management system to the controller (150);
determining, via at least a second camera (108) mounted to the material handling vehicle (60) via a moveable camera assembly, whether the drop-off location is vacant using at least the second camera (108);
extending a fork (74) secured to the material handling vehicle (60) towards the load (604) to position the load within the drop-off location;
determining, via a fork position sensor (602) secured to the material handling vehicle (60), that the fork (74) is in an extended position;
sensing, via a load beam sensor (603) secured to the material handling vehicle (60) adjacent the fork position sensor (602), that a load beam (505) of the drop-off location is within a predetermined proximity of the load (604);
lowering the fork (74) to place the load (604) within the drop-off location when the fork position sensor (602) determines that the fork (74) is in an extended position and the load beam sensor (603) senses the load beam (505) is within the predetermined proximity of the load (604); and

retracting the fork (74) to disengage the load (604).

14. The method of claim 13, further comprising:

delaying imaging via the second camera (108) base on an input from an accelerometer (601) in electrical communication with the controller;
wherein the accelerometer (601) determines an oscillation frequency of a mast (72) of the material handling vehicle (60).

15. The method of claim 13 or 14, further comprising:

beginning a settle time countdown upon each stop of movement of the material handling vehicle (60); and
delaying imaging via the second camera (108) until after the settle time countdown has elapsed.

FIG. 1

FIG. 2

FIG. 3

FIG. 4

FIG. 5

FIG. 6

700

604

602

603

74

505

FIG. 7

```
                          FIRST HALF FORK      SECOND HALF FORK      PRE-DETECT          DETECT              LOWER
                          MOVEMENT PHASE       MOVEMENT PHASE         PHASE              PHASE               PHASE
```

| LIFT FORKS TO TARGET HEIGHT AND AWAIT MAST ON TARGET | → | MOVE FORKS 50%, MONITOR FORK TIP SENSORS | → | MOVE FORKS TO 75%, AWAITS FORK POSITION SENSOR TRIGGER | → | AWAIT LOAD BEAM SENSOR OFF | → | AWAIT LOAD BEAM TRANSITION OFF TO ON | → | LOWER LOAD TO TRANSFER TO RACK OR FLOOR LOCATION | → |

```
     805              810              815              820              825              830
```

800

# FIG. 8

FIG. 9

EP 4 446 252 A2

FIG. 10

FIG. 11

FIG. 12

EP 4 446 252 A2

EP 4 446 252 A2

FIG. 13

EP 4 446 252 A2

MATERIAL HANDLING VEHICLE <u>60</u>

SENSORS
<u>123</u>

TRANSCEIVER
<u>113</u>

CONTROLLER
<u>150</u>

PRIMARY
NAVIGATION
UNIT
<u>111</u>

119

WAREHOUSE MANAGEMENT SYSTEM <u>121</u>

TRANSCEIVER
<u>117</u>

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63452631